Europäisches Patentamt

European Patent Office

Office européen des brevets

(11) Publication number: **0 066 398**
**B1**

(12) **EUROPEAN PATENT SPECIFICATION**

(45) Date of publication of patent specification: **28.05.86**

(21) Application number: **82302479.9**

(22) Date of filing: **14.05.82**

(51) Int. Cl.⁴: **F 15 B 11/16**

(54) **Hydraulic control systems.**

| | |
|---|---|
| (30) Priority: **15.05.81 GB 8115004** **23.06.81 GB 8119376** | (73) Proprietor: **CLAYTON DEWANDRE COMPANY LIMITED** **P.O. Box 9 Titanic Works** **Lincoln, LN5 7JL (GB)** |
| (43) Date of publication of application: **08.12.82 Bulletin 82/49** | (72) Inventor: **Hawker, Michael John** **7 Nursery Grove** **Lincoln (GB)** |
| (45) Publication of the grant of the patent: **28.05.86 Bulletin 86/22** | |
| (84) Designated Contracting States: **DE FR GB IT SE** | (74) Representative: **Hartley, David et al** **c/o Withers & Rogers 4 Dyer's Buildings Holborn** **London, EC1N 2JT (GB)** |
| (56) References cited: **DE-A-3 101 907** **FR-A-2 282 059** **US-A-2 799 996** **US-A-2 850 878** **US-A-2 984 186** | |

Courier Press, Leamington Spa, England.

## Description

This invention relates to hydraulic control systems and, in particular hydraulic systems for controlling braking, power steering and other ancillary equipment on motor vehicles.

A typical hydraulic steering unit requires a constant flow output whereas it is often required, on the same vehicle to power the vehicle brakes via a full power hydraulic valve demanding a supply of hydraulic fluid at constant pressure. In the past it has been necessary to supply separate pumps for each circuit which is both inconvenient and expensive.

US—A—2 799 996 and 2 850 878 disclose an hydraulic control system in which two circuits are fed from a single source: a hydraulic pump. One circuit is an open centre steering circuit and the other is a closed centre accumulator circuit feeding a vehicle braking system and/or accessories such as power seats or windows. A flow dividing valve is provided to divide the source flow between the circuits, the open centre steering circuit being given priority at all times.

According to the present invention, we propose a hydraulic control system comprising a constant flow circuit and a constant pressure circuit and a multi-cylinder pump supplying hydraulic fluid, the outlet of one or some of the pump cylinders being in permanent communication with the constant flow circuit and the outlet of at least one of the pump cylinders being in communication with the constant pressure circuit via a diverter valve operable to divert fluid from the constant pressure circuit to the constant flow circuit when the pressure on the constant pressure circuit exceeds a predetermined value. The multi-cylinder pump may be a conventional reciprocating pump or preferably a swash-plate pump.

It will be understood that in contrast to the systems disclosed in US—A—2 799 996 and 2 850 878 each of the two circuits has a dedicated fluid supply. The constant pressure circuit always has a supply of fluid, the output of at least one pump cylinder, available to charge the circuit. The flow is diverted to supplement the supply to the constant flow circuit when the pressure in the constant pressure circuit exceeds the predetermined value.

The invention is applicable, with particular advantage, when the constant pressure circuit is, for example, the braking circuit of a motor vehicle and the other circuit is a constant flow circuit such as required for operating the vehicle power steering unit. Since the maximum fluid delivery requirements for steering and braking do not in general conflict, the entire output of the multi-cylinder pump is available to meet peak steering demands once the constant pressure circuit is charged to the said predetermined value to meet peak braking demands.

Preferably, the diverter valve operates in response to a pressure signal generated by a governor valve responsive to the pressure in the constant pressure circuit.

This invention enables constant flow and constant pressure circuits to be powered from the same source and further, the diverter valve acts as a safety valve to protect the constant pressure circuit.

One embodiment of the invention will now be described by way of example with reference to the accompanying drawings, in which:

Figure 1 is a diagram of a combined constant flow and constant pressure hydraulic control system according to the invention;

Figure 2 is a cross-section of the governor valve connected in the constant pressure circuit of the system shown in Figure 1; and

Figure 3 is a cross-section of the swash-plate pump through a cylinder thereof fitted with a diverter valve as shown incorporated in the system of Figure 1;

Figure 4 is an end view of the pump shown in Figure 3;

Figure 5 is detail cross-section of the swash-plate pump shown in Figure 3 but taken through one of the other cylinders.

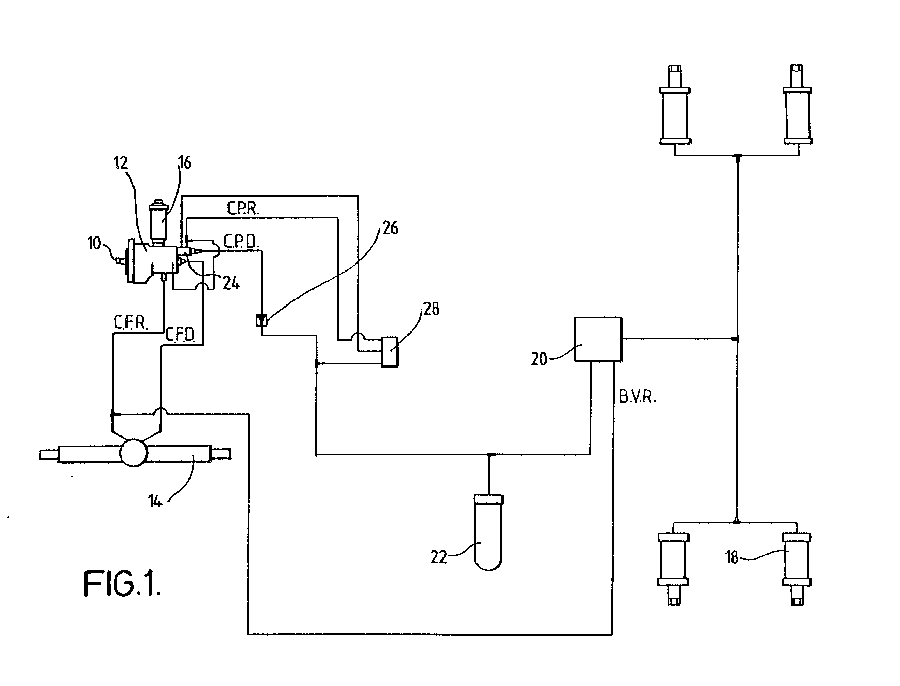

The system shown in Figure 1 includes a constant flow circuit including a steering unit and valve 14, and having constant flow delivery CFD and constant flow return CFR lines connected for the supply thereto of hydraulic fluid to a three-cylinder swash-plate pump 12 having a drive shaft 10 and oil reservoir 16. A constant pressure circuit controlling vehicle brakes 18 via a full power hydraulic brake valve 20 includes a hydraulic accumulator 22 which is supplied with fluid under pressure by the same swash-plate pump 12 via a diverter valve 24. Downstream of a non-return valve 26 in the constant pressure delivery line CPD and upstream of the accumulator 20 is a branched connection to governor valve 28 having both constant pressure return line CPR and a signal line S to the diverter valve 24. The brake valve return line BVR is in common with the constant flow return line CFR.

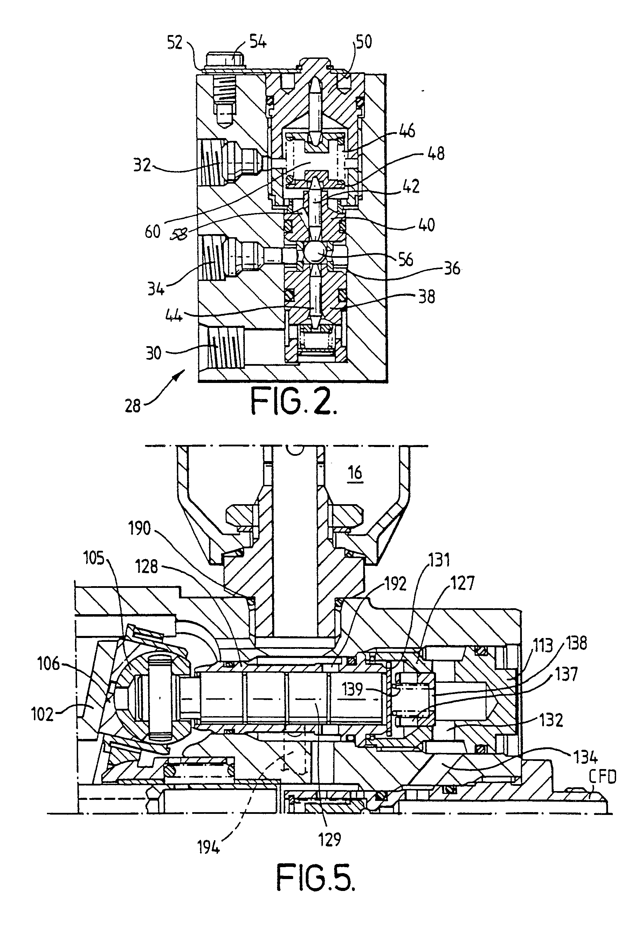

As shown in Figure 2, the governor valve 28 has a supply port 30 (in communication with the delivery line CPD) a return port 32 (to which the return line CPR is connected) and a signal or trigger port 34. Within the governor valve bore 36 are sleeves 38 and 40 each having a control bore in which a pin 42 and 44 is slidable with a loose clearance fit. The upper pin 42 is biased downwardly by a spring 46 acting on a pressure plate 48 with a force which is adjustable by varying the position of a screwed plug 50 in a threaded upper end of the bore 36. The plug 50 is retained against movement due to spurious vibration etc., by a locking strip 52 clamped by a screw 54.

When the accumulator is fully charged, the pressure at the supply port 30 is sufficient to raise the lower pin 44 so lifting the ball 56 from its seat on the lower sleeve 38 into contact with the seat on the upper sleeve 40 against the action of the spring 46. In this state, oil leaks through the clearance between the pin 44 and the sleeve 38 (at the same time creating sufficient drag force on the pin to resist the spring) to generate a high pressure signal at the signal port 34 connected to the diverter valve 24. Should the accumulator pressure fall below this level, the pin 42 is pressed down by the spring 46 onto its seat on the lower sleeve, so shutting off the supply port 30 and establishing a flowpath through the sleeve 40, drillings 58 and spring chamber 60 to the return port 32, whereby the pressure signal is removed. This causes the diverter valve 24 to supply fluid under pressure as described below until the desired pressure is reached, at which point the pin 44 is once again lifted to transmit a pressure signal to the diverter valve 24.

The governor cut-out pressure is typically 2500 psi (17237 $KN/m^2$) but is adjustable by means of the screwed plug — and the cut-in (i.e. the point at which a pressure signal is transmitted to the diverter valve) pressure may be about 150 psi (1034 $KN/m^2$) below the cut-out pressure.

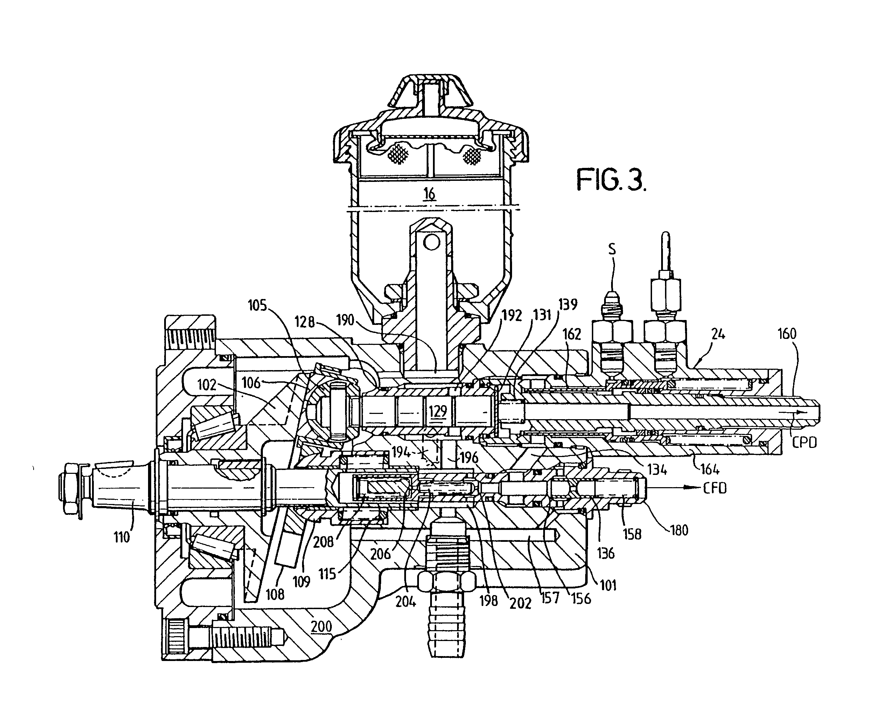

Referring now to Figures 3 to 5, the swash-plate pump 12 has a rotatable drive shaft 110 to which is keyed a swash-plate 102 in sliding contact with a piston return plate 108 and three pistons 129, each working within a cylindrical sleeve 128 and connected to the return plate 108 by a trunnion 105 seated in a cup 106 forming a universal type ball and socket joint. The return plate 108 is mounted upon the part spherical end of a hollow plunger 109 which end is urged into engagement with a complementary central seat in the return plate by a spring 115. As the drive shaft 110, which passes through the hollow plunger 109, rotates relative thereto the inclined working face of the swash plate 102 slides over the rear face of the return plate 108 so causing the return plate to pivot or wobble back and forth on the part spherical end of the spring-loaded plunger 109 so displacing each piston 129 in turn through a working and return stroke within the associated cylinder sleeve 128.

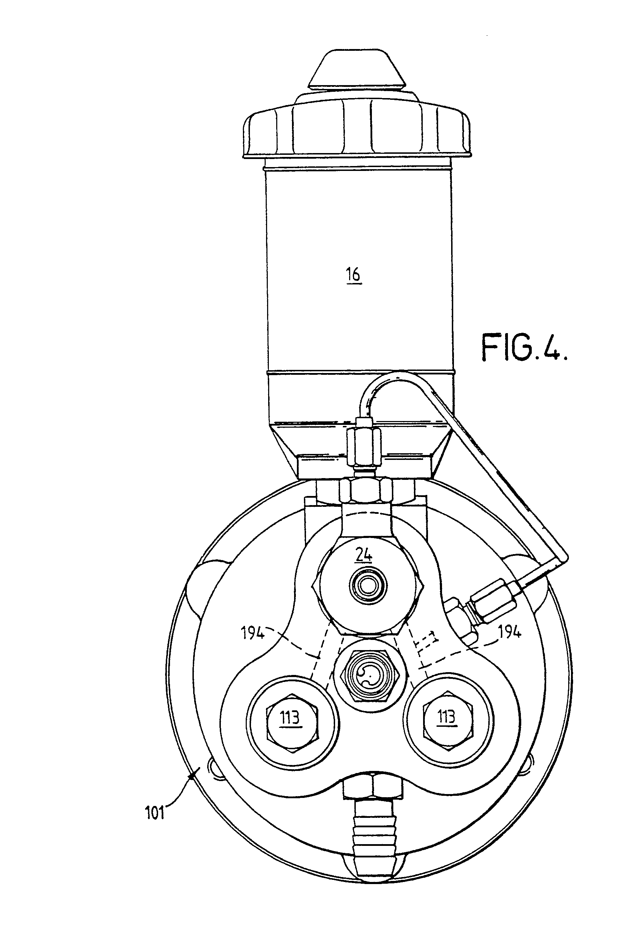

Each of the cylindrical sleeves 128 is fitted, together with associated seals, in a bore in the pump body 101. All of these bores contain a square plate-valve 131 urged against a valve seat defined by the end of the sleeve 128 by a spring 139. Two of the said bores are closed by a plug 113 (see Figures 4 and 5) having drillings 132 communicating via other drillings 134 in the body 101, with the constant flow delivery port incorporating a flow control valve 136 to which the delivery line CFD is connected. In the case of these two bores, the spring 139 is received within a spring guide 127 which has radial ports 137 and an axial port 138 communicating via the said drillings with the constant flow delivery port CFD.

The diverter valve 24 is fitted in and closes the third bore of the pump. As will be seen from Figure 3 this includes an outlet pipe 160 for connection to the delivery line CPD and carries a sleeve 162 which is slidable within the annular gap between the outlet pipe 160 and the diverter valve housing 164, when a pressure signal appears on the signal line S, to uncover radial drillings in the pipe 160 so diverting the fluid discharged from the associated cylinder to the constant flow circuit via the drillings 134 in the pump housing 101.

The areas within the diverter valve 24 are such that should the governor valve 28 fail, the pumping pressure lifts the diverter valve admitting fluid to the constant flow circuit so that a separate safety valve is not required for the constant pressure brake circuit.

The oil reservoir 16 mounted on the pump body 101 communicates with the interior of the cylindrical sleeve 128 in the bore fitted with the diverter valve 24, via an annular chamber 190 and radial drillings 192 in the sleeve itself. The chamber 190 also communicates via drillings 194 with similar annular chambers surrounding the other two cylindrical sleeves 128 and with the constant flow return via drillings 196 and an annular chamber 198 surrounding the outlet pipe 180.

Within the outlet pipe 180 is a flow control valve comprising a bush 136 having a restricted central orifice and biased toward a position wherein the bush 136 engages a seat 156 closing-off a flowpath 157 communicating with the constant flow circuit return. Thus when the delivery via drillings 134 to the interior of the outlet pipe 160 exceeds a predetermined flow determined by the strength of spring 158, the bush unseats so diverting fluid directly to the constant flow return and thence to the reservoir 16.

The outlet pipe 180 also incorporates a pilot operated pressure relief valve 200 open to the pressure of fluid delivery in the chamber preceding the flow control valve 136 via a restricted orifice 202. When the pressure within a chamber 204 exceeds a predetermined value (typically 2500 psi (17237 $KN/m^2$)) a ball valve 206 is lifted from its seat in opposition to a ball leading spring 208 so establishing communication with the constant flow return until the delivery pressure falls to below the said predetermined value.

The flow control valve and pilot operated pressure relief are fitted to safeguard the constant flow steering circuit. Additionally, the pump inlet ports are arranged to give flow starvation when the pump is at very high speeds such as engine over-run.

### Claims

1. A hydraulic control system comprising a constant flow circuit (CFD, CFR), a constant pressure circuit (CPD, CPR), a pump (12) for supplying said circuits with hydraulic fluid, and a diverter valve (24), characterised in that the said pump is a multi-cylinder pump (12), the outlet (138) of one or some of the pump cylinders (128) being in permanent communication (132, 134, 136) with the constant flow circuit and in that the outlet of at least one of the pump cylinders (128) is in communication with the constant pressure circuit via the diverter valve (24) operable to divert fluid from the constant pressure circuit to the constant flow circuit when the pressure within the constant pressure circuit exceeds a predetermined value.

2. A system according to claim 1 wherein the multi-cylinder pump is a swash plate pump.

3. A hydraulic control circuit according to claim 1 or claim 2 wherein the constant pressure circuit is the braking circuit of a road vehicle and the constant flow circuit serves to supply fluid under constant flow conditions for operating a power steering unit (14) of the vehicle.

4. A hydraulic control circuit according to claim 3 characterised in that the diverter valve (24) is operable in response to a pressure signal generated by a governor valve (28) which is responsive to the pressure of the fluid in the constant pressure circuit.

**Patentansprüche**

1. Hydraulisches Steuersystem mit einem Kreislauf (CFD, CFR) mit konstantem Durchfluß, mit einem Kreislauf (CPD, CPR) mit konstantem Druck, mit einer Pumpe (12) zum Versorgen der Kreisläufe mit Hydraulikfluid und mit einem Umlenkventil (24) dadurch gekennzeichnet, daß die Pumpe eine Pumpe (12) mit mehreren Zylindern ist, wobei der Auslaß (138) eines oder einiger der Pumpenzylinder (128) in dauernder Verbindung (132, 134, 136) mit dem Kreislauf mit konstantem Durchfluß steht und daß der Auslauf wenigstens eines der Pumpenzylinder (128) in Verbindung mit dem Kreislauf mit konstantem Druck über das Umlenkventil (24) steht, das so arbeitet, daß Fluid vom Kreislauf mit konstantem Druck zum Kreislauf mit konstantem Durchfluß umgeleitet wird, wenn der Druck in dem Kreislauf mit konstantem Druck einen vorgegebenen Wert überschreitet.

2. System nach Anspruch 1, bei welchem die Pumpe mit mehreren Zylindern eine Taumelscheibenpumpe ist.

3. Hydraulischer Steuerkreis nach Anspruch 1 oder Anspruch 2, bei welchem der Kreislauf mit konstantem Druck der Bremskreis eines Straßenfahrzeugs ist und der Kreislauf mit konstantem Durchfluß dazu dient, den Fluid unter konstanten Durchflußbedingungen für die Betätigung einer Servolenkeinheit (14) der Fahrzeugs zuzuführen.

4. Hydraulischer Steuerkreis nach Anspruch 3, dadurch gekennzeichnet, daß das Umlenkventil (24) ansprechend auf ein Drucksignal betätigbar ist, das von einem Reglerventil (28) erzeugt wird, das auf den Druck des Fluids in dem Kreislauf mit konstantem Druck anspricht.

**Revendications**

1. Installation de contrôle hydraulique comprenant un circuit à débit constant (CFD, CFR), un circuit à pression constante (CPD, CPR), une pompe (12) d'alimentation desdits circuits avec un fluide hydraulique, et une soupape de dérivation (24), caractérisée en ce que ladite pompe est une pompe à cylindres multiples (12), l'orifice d'évacuation (138) de l'un, ou de certains, des cylindres de pompe (128) étant en communication permanente (132, 134, 136) avec le circuit à débit constant et, en ce que, l'orifice d'évacuation de l'un au moins des cylindres de pompe (128) est en communication avec le circuit à pression constante par l'intermédiaire de la soupape de dérivation (24) utilisable pour dériver le fluide du circuit à pression constante vers le circuit à débit constant, lorsque la pression à l'intérieur du circuit à pression constante excède une valeur déterminée.

2. Installation selon la revendication 1, dans laquelle la pompe à cylindres multiples est un pompe à plateau oscillant.

3. Circuit de contrôle hydraulique selon la revendication 1 ou la revendication 2, dans lequel le circuit à pression constante est le circuit de freinage d'un véhicule automobile et, le circuit à débit constant sert à fournir un fluide dans des conditions de débit constant de façon à commander l'unité de direction assistée (14) du véhicule.

4. Circuit de contrôle hydraulique, selon la revendication 3, caractérisée en ce que la soupape de dérivation (24) est actionnable en réponse à un signal de pression généré par une soupape de régulation (28) sensible à la pression du fluide dans le circuit à pression constante.

FIG.1.

C.P.R.

C.P.D.

C.F.R.

C.F.D.

B.V.R.

0 066 398

FIG. 2.

FIG. 5.

FIG.3.

FIG.4.